# EUROPEAN PATENT APPLICATION

(11) **EP 4 542 059 A1**
(43) Date of publication of application: **23.04.2025**
(21) Application number: 23204753.0
(22) Date of filing: 19.10.2023
(51) Int. Cl.: F16B 2/00, F16B 11/00

(54) **METHOD FOR ASSEMBLING COMPONENTS TOGETHER USING FRICTION-ENHANCING COATING**

(71) Applicant: BRP-Rotax GmbH & Co. KG, 4623 Gunskirchen (AT)
(72) Inventor: MATHEIS, Andreas, 94032 Passau (DE); TORTELLI, Vagner, 4040 Lichtenberg (AT); LEITNER, Wilhelm, 4690 Rutzenham (AT); POELLHUBER, Michael, 4604 Ohlsdorf (AT); BRUNNMAIR, Robert, 4731 Prambachkirchen (AT)
(74) Representative: Murgitroyd & Company

(57) **Abstract**

A method for assembling first and second components together includes: coating at least a portion of a first connection surface (12, 106) of the first component with a friction-enhancing coating (FEC) having particles (104) that are harder than a material of the first connection surface and a material of a second connection surface (202) of the second component; and connecting the first component to the second component such that: the first and second connection surfaces abut; and the particles of the FEC penetrate the first and second connection surfaces. The method also includes: covering the FEC with a layer of compressible material (44, 108) prior to connecting the first and second components for preventing the particles from falling off of the first connection surface; and when the first and second components are connected, the layer of compressible material is compressed and at least some of the particles pierce the layer of compressible material.

## Description

### CROSS-REFERENCE

None

### TECHNICAL FIELD

The present technology relates to methods for assembling components together using a friction-enhancing coating, and to mechanical assemblies assembled using such methods.

### BACKGROUND

In many assemblies where two components are assembled together such that surfaces of the components abut each other, forces acting on the assembly can cause the components to move slightly relative to each other along the abutting surfaces. These forces can be due, for example, from one or more of tension, compression and torsion of the assembly and/or from vibrations. In some assemblies, these movements are undesirable.

For example, a transmission has a housing body and a housing cover connected to the housing body via multiple bolts. Shafts of the transmission mechanism pass through openings in the housing body and the housing cover. These shafts are supported in the housing body and the housing cover by bearings. Forces acting on the shafts are transferred to the bearings which can lead to small movements of the housing cover relative to the housing body. Theses small movements result in movements of the bearings which could lead to premature bearing failures. These small movements could also lead to premature failure of gears supported by the shafts.

One solution to the above problem consists in increasing the clamping force between the two components of the assembly. In the example of the transmission, this can be achieved by using larger diameter bolts and/or more bolts to connect the housing body and the housing cover together. However, this increases the weight and complexity of the assembly of the housing body and the housing cover.

An alternative solution to the above problem consists in increasing the friction between the two components. This can be achieved by coating the abutting surface of one of two components to be assembled with a friction-enhancing coating prior to assembly. The friction-enhancing coating consists of hard particles and other elements for bonding the hard particles to the surface. When the two components are connected together, the clamping force between the two components cause the particles of the friction-enhancing coating to penetrate the abutting surfaces of the components. As a result, the relative movement between the two components is reduced. In the example of the transmission, the friction-enhancing coating is applied around apertures defined in one of the housing body and the housing cover.

However, when using a friction-enhancing coating, some of the particles can detach from the surface to which they are applied while handling the component for assembly. As these particles are hard, the detached particles could potentially damage some other components of the assembly. In the example of the transmission, particles that come off of the housing cover can fall at the bottom of the transmission during assembly. Once the transmission is assembled, lubricant is added inside the transmission and accumulates at the bottom of the transmission. During operation of the transmission, the particles that fell at the bottom of the transmission can get entrained with the lubricant. These entrained particles could make their way to gears or bearings of the transmission, and as a result these gears and bearings could be damaged.

Therefore, there is a desire for a method for assembling two components together that can overcome at least some of the above-described drawbacks.

### SUMMARY

It is an object of the present technology to ameliorate at least some of the inconveniences present in the prior art.

According to one aspect of the present technology, there is provided a method for assembling a first component and a second component together. The first component has a first connection surface, the second component has a second connection surface. The method comprises: coating at least a portion of the first connection surface with a friction-enhancing coating, the friction-enhancing coating comprising particles, the particles being harder than a material of the first connection surface and a material of the second connection surface; and connecting the first component to the second component such that: the first connection surface abuts the second connection surface; and the particles of the friction-enhancing coating penetrate the first connection surface and the second connection surface. The method is characterized in that the method further comprises: covering the friction-enhancing coating with a layer of compressible material prior to connecting the first component to the second component for preventing the particles from falling off of the first connection surface, and when the first component is connected to the second component, the layer of compressible material being compressed and at least some of the particles piercing the layer of compressible material.

In some embodiments, covering the friction-enhancing coating with the layer of compressible material comprises covering an area of the first connection surface with the layer of compressible material that is greater than an area of the first connection surface covered by the friction-enhancing coating such that the friction-enhancing coating is fully covered by the layer of compressible material.

In some embodiments, the first component defines a first aperture in the first connection surface; the second component defines a second aperture in the second connection surface; and connecting the first component to the second component comprises: aligning the first aperture with the second aperture; inserting a fastener through the first aperture and the second aperture; and fastening the first component to the second component with the fastener.

In some embodiments, coating at least the portion of the first connection surface with the friction-enhancing coating comprises: coating a region of the first connection surface surrounding and adjacent to the first aperture with the friction-enhancing coating.

In some embodiments, coating the region of the first connection surface surrounding and adjacent to the first aperture with the friction-enhancing coating comprises: applying the friction-enhancing coating over multiple annulus sectors around the first aperture.

In some embodiments, covering the friction-enhancing coating with the layer of compressible material comprises: applying the layer of compressible material over an annular area surrounding the first aperture.

In some embodiments, an inner radius of the annular area is equal to a radius of the first aperture.

In some embodiments, an outer circumference of the annular area is radially outward of the friction-enhancing coating.

In some embodiments, the method further comprises cleaning the first component after coating at least the portion of the first connection surface with the friction-enhancing coating and before covering the friction-enhancing coating with the layer of compressible material.

In some embodiments, covering the friction-enhancing coating with the layer of compressible material comprises: spraying the compressible material over the friction-enhancing coating to form the layer of compressible material.

In some embodiments, the layer of compressible material is a layer of elastomer.

In some embodiments, the layer of compressible material is a layer of spray film.

In some embodiments, the friction-enhancing coating is GRIPCOAT^{®} Direct and the particles are industrial diamonds.

In some embodiments, the first component is a first portion of a mechanical housing; and the second component is a second portion of the mechanical housing.

According to another aspect of the present technology, there is provided a mechanical assembly having: a first component having a first connection surface; and a second component having a second connection surface. The first component and the second component are assembled together by the above method.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

It must be noted that, as used in this specification and the appended claims, the singular form "a", "an" and "the" include plural referents unless the context clearly dictates otherwise.

As used herein, the term "about" in the context of a given value or range refers to a value or range that is within 20%, preferably within 10%, and more preferably within 5% of the given value or range.

As used herein, the term "and/or" is to be taken as specific disclosure of each of the two specified features or components with or without the other. For example "A and/or B" is to be taken as specific disclosure of each of (i) A, (ii) B and (iii) A and B, just as if each is set out individually herein.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a left side elevation view of a transmission in accordance with the present technology;
Figure 2 is a right side elevation view of a cover of the transmission of Fig. 1;
Figure 3 is a close-up perspective view of section A of the cover of Fig. 2;
Figure 4 is a schematic cross-section of the cover of Fig. 2 taken through line 4-4 of Fig. 3;
Figures 5A to 5D are schematic representations of different steps of a method for assembling components together in accordance with the present technology; and
Figure 6 is a flowchart of the method schematically illustrated in Figs. 5A to 5D.

### DETAILED DESCRIPTION

The present disclosure is not limited in its application to the details of construction and the arrangement of components set forth in the following description or illustrated in the drawings. The disclosure is capable of other embodiments and of being practiced or of being carried out in various ways. Also, the phraseology and terminology used herein is for the purpose of description and should not be regarded as limiting. The use of "including", "comprising", or "having", "containing", "involving" and variations thereof herein, is meant to encompass the items listed thereafter as well as, optionally, additional items. In the following description, the same numerical references refer to similar elements.

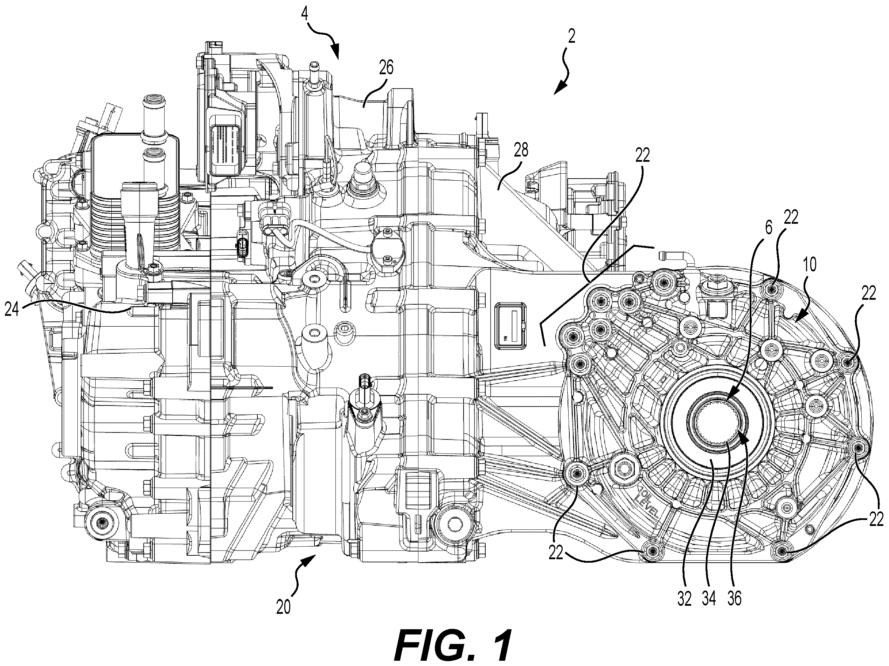

A transmission 2 in accordance with the present technology will be described with reference to Figs. 1 to 4. The transmission 2 has a mechanical housing, specifically a transmission housing 4, inside which various mechanical components (not shown) of the transmission 2 are housed. The transmission 2 has transmission outputs 6 on either side thereof (only the left one being shown). In the present embodiment, the transmission outputs 6 are configured to operatively connect to axles of a road vehicle. The transmission housing 4 has a housing cover 10 fastened to a housing body 20 by multiple threaded fasteners 22. In the present embodiment, the fasteners 22 are bolts 22.

The housing body 20 has a front section 24, a middle section 26 and a rear section 28. The sections 24 and 26 are fastened to each other. The sections 26 and 28 are fastened to each other. The housing cover 10 is fastened to the rear section 28 of the housing body 20 to close an opening (not shown) defined in a left side of the rear section 28. The housing cover 10 defines an aperture 30. The left transmission output 6 includes a bearing 32 and a sleeve 34 having internal splines 36. The bearing 32 is inserted in the aperture 30. The sleeve 34 is inserted in the bearing 32. It is contemplated that the housing body could have more or less than the three sections 24, 26, 28.

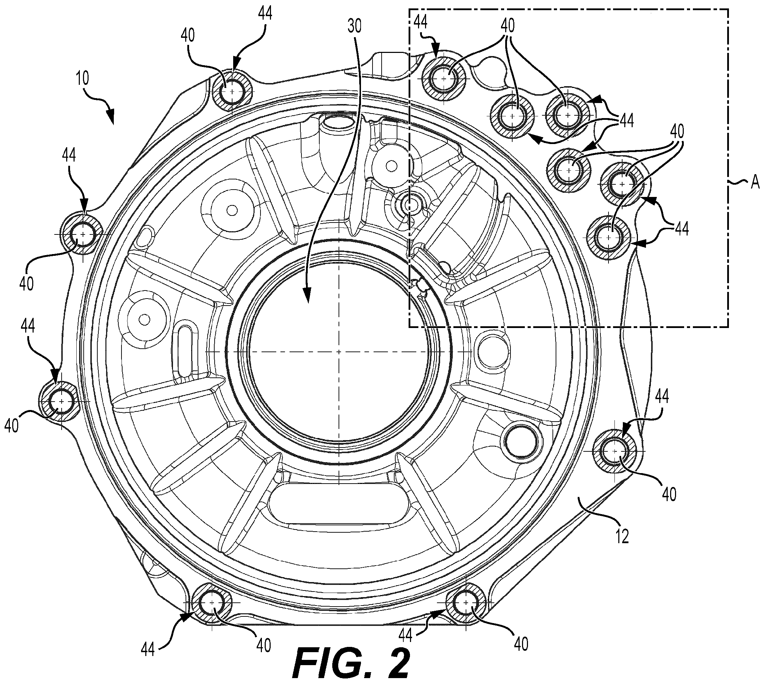

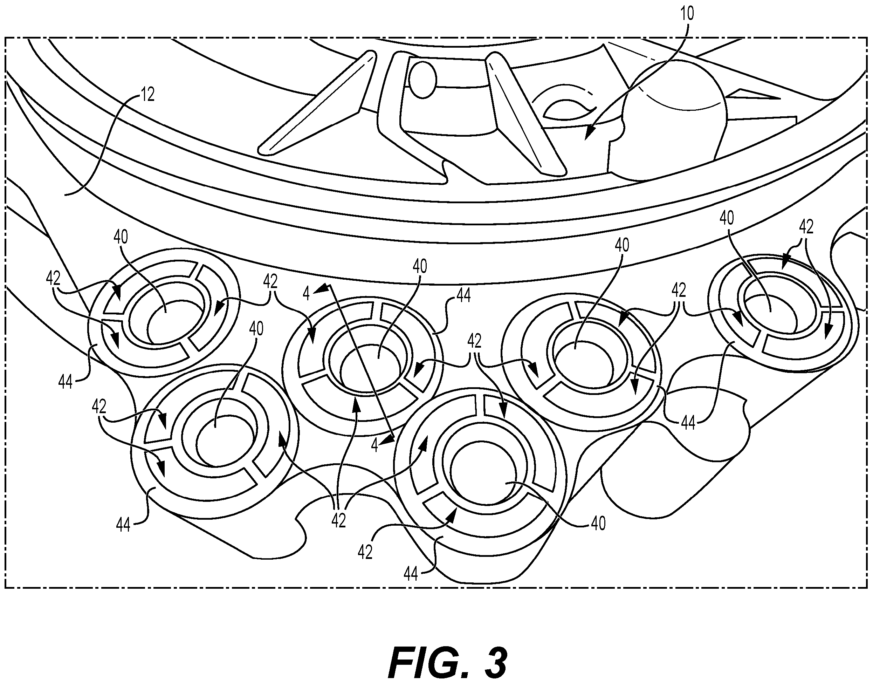

With reference to Figs. 2 and 3, the housing cover 10 has a connection surface 12 that abuts a corresponding connection surface (not shown) on the rear section 28 of the housing body 20. For each threaded fastener 22, the housing cover 10 defines a aperture 40 in the connection surface 12 and the rear section 28 of the housing body 20 defines a corresponding aperture (not shown) in the connection surface of the rear section 28. In order to increase friction between the housing cover 10 and the rear section 28 of the housing body 20, prior to connecting the housing cover 10 to the rear section 28 of the housing body 20, the region of the connection surface 12 surrounding and adjacent to each aperture 40 is coated with a friction-enhancing coating 42 (hereinafter "FEC 42") that is covered with a layer of compressible material 44, as shown in Fig. 3 for some of the apertures 22.

Friction-enhancing coatings are coatings which, as the name suggests, once applied to a surface increases the friction between this surface and another surface abutting it. More specifically, friction-enhancing coatings include hard particles that are bonded or otherwise attached to the surface to be coated. The particles are made of a material that is harder than the material of the surfaces between which it is sandwiched so as to penetrate these surfaces when the components having these surfaces are connected to each other. In the present embodiment, the FEC 42 has particles that are harder than the connection surface 12 of the of the housing cover 10 which is made from cast aluminum and harder than the connection surface of the of the rear section 28 of the housing body 20 which is also made from cast aluminum. It is contemplated that the housing cover 10 and the rear section 28 of the housing body 20 could be made from other materials, such as cast iron for example, in which case the particles of the FEC 42 would be harder than cast iron. In the present embodiment, the particles are industrial diamonds. In one embodiment the FEC 42 is GRIPCOAT^{®} Direct in which the particles are industrial diamonds encased in nickel and the particles are applied to the connection surface 12 using atmospheric plasma to create the coating. It is contemplated that an FEC 42 having a different type of particles, such as glass fiber or steel particles, and/or a different means of applying it to the connection surface 12 could be used.

As can be seen in Fig. 3, in the present embodiment the FEC 42 is applied on the surface 12 over three annulus sectors around each of the apertures 40. It is contemplated that the FEC 42 could be applied over two or more than three annulus sectors around each of the apertures 40. It is also contemplated that the FEC 42 could be applied as an annulus around each of the apertures 40. It is also contemplated that the FEC 42 could be applied over only part of a periphery of each of the apertures 40. It is also contemplated that the FEC 42 could not be applied the same way for each of the apertures 40. It is also contemplated that the FEC 42 could be applied over regions of the connection surface 12 other than the regions surrounding and adjacent to the apertures 40. It is also contemplated that the FEC 42 could be applied over an entirety of the connection surface 12. It is also contemplated that the FEC 42 could be applied to the connection surface of the rear section 28 of the housing body 20 in addition to or instead of the FEC 42 applied to the connection surface 12.

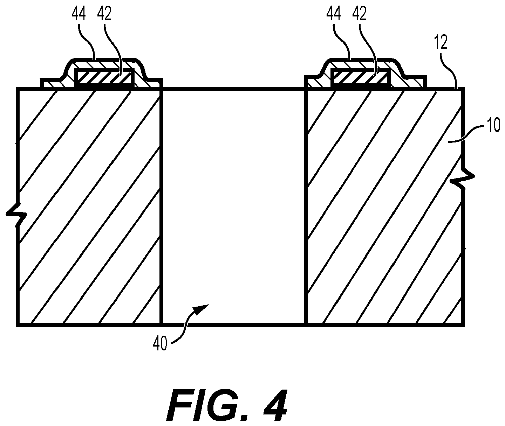

The layer of compressible material 44 covers the FEC 42 to prevent the particles of the FEC 42 from falling off of the connection surface 12. When the housing cover 10 is connected to the rear section 28 of the housing body 20, the layer of compressible material 44 is compressed and at least some of the particles of the FEC 42 pierce the layer of compressible material 44 to then penetrate the connection surfaces as described above. In some embodiments, the layer of compressible material 44 is a layer of elastomer. In some embodiments, the layer of compressible material 44 is a layer of spray film, such as rim spray film from Foliatec^{™} or SprayPlast^{™} from Dupli-Color Tuning^{™}, that is sprayed over the FEC 42. In some embodiments, the layer of compressible material 44 is a layer of paint or a layer of adhesive. With reference to Figs. 3 and 4, for each aperture 40, the layer of compressible material 44 covers an area of the connection surface 12 that is greater than an area of the connection surface 12 that is covered by the FEC 42 such that the FEC 42 is completely covered by the layer of compressible material 44. For each aperture 40, the layer of compressible material 44 is applied over an annular area surrounding the aperture 40 and completely covering the three annulus sections of the FEC 42. As best seen in Fig. 4, the inner radius of the annular area covered by the layer of compressible material 44 is equal to the radius of the aperture 40, so as to extend all the way to the edge of the aperture 40, and the outer circumference of the layer of compressible material 44 is radially outward of the FEC 42. As such the layer of compressible material 44 extends radially inward and outward of the FEC 42. In some embodiments, it is contemplated that a layer of compressible material could cover the FEC 42 provided around two or more apertures 40. With reference to Fig. 4, it can be seen that the layer of compressible material 44 is thinner than the FEC 42. The thickness of FEC 42 varies as it has particles of different sizes and gaps between the particles. As such the thickness of the layer of compressible material 44 over the FEC 42 also varies as it mostly fills the gaps and valleys of the FEC 42. In some embodiment, the particles of the FEC 42 have a size of 25 µm or less and the layer of compressible material 44 has a thickness of about 10 µm (i.e. about 10 µm over the portions of the connection surface 12 that are free of FEC 42 and about 10 µm over the highest points of the FEC 42). Other particle sizes and thicknesses of layer of compressible material 44 are contemplated.

Once the FEC 42 and the layer of compressible material 44 have been applied around each aperture 40, the housing cover 10 is connected to the rear section 28 of the housing body 20 using the fasteners 22, thereby compressing the layers of compressible material 44 between the connection surfaces, causing the particles of the FEC 42 to pierce the layers of compressible material 44. Once the connection surface 12 of the housing cover 10 abuts the connection surface of the rear section 28 of the housing body 20, at least some of the particles of the FEC 42 penetrate the connection surfaces, thereby increasing the friction between the housing cover 10 and the rear section 28 of the housing body 20.

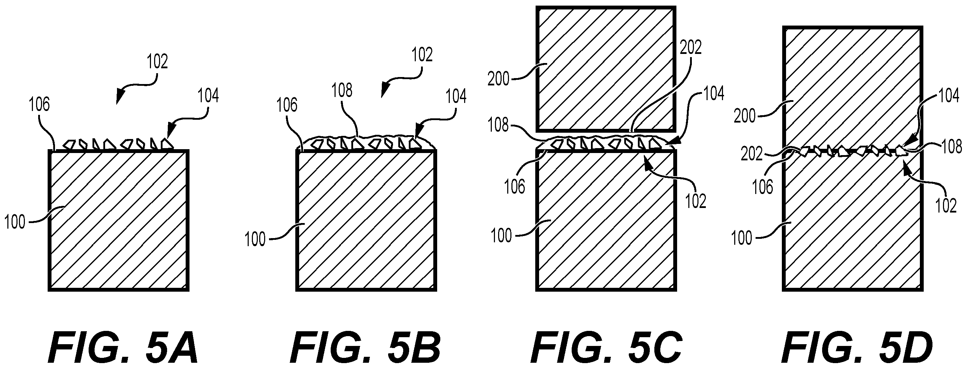

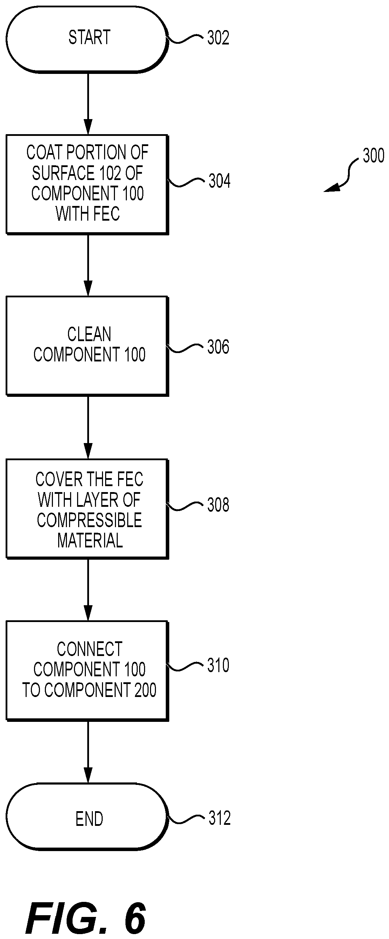

A method 300 for assembling two components 100, 200 together will now be described with reference to Figs. 5A to 6. Specific aspects of the method 300 will also be described with reference to the transmission 2 illustrated in Figs. 1 to 4 and described above. The transmission 2 is an example of a mechanical assembly which can be assembled by the method 300. In this example, the housing cover 10 corresponds to the component 100 and the rear section 28 of the housing body 20 corresponds to the component 200.

The method 300 begins at 302 where the component 100 and 200 to be connected are provided. Then at 304, a friction enhancing coating 102 (hereinafter "FEC 102") having particles 104 is used to coat at least a portion of a connections surface 106 of the component 100 as shown in Fig. 5A. The FEC 102 corresponds to the FEC 42 or alternatives of the FEC 42 described above. In the transmission 2, step 304 corresponds to coating the regions around the apertures 40 with the FEC 42 as described above.

Once the FEC 102 has set (if required), then at 306 the component 100 is cleaned in order to remove any particles 104 that may not have adhered to the connection surface 106 during the coating step 304. In one embodiment, the component 100 is cleaned in an alcohol-based liquid using an ultrasonic cleaning process. Other cleaning processes are contemplated. It is contemplated that in some embodiments, the step 306 could be omitted.

Then at step 308, the FEC 102 is covered by a layer of compressible material 108 as can be seen in Fig. 5B. The layer of compressible material 108 fully covers the FEC 102 to prevent the particles 104 from falling off of the connection surface 106, which could otherwise occur during the handling of the component 100 after being coated with the FEC 102. As can be seen in Fig. 5B, in the present embodiment, the layer of compressible material 108 covers an area of the connection surface 106 that is greater than the area covered by the FEC 102. The layer of compressible material 108 corresponds to the layer of compressible material 44 or alternatives of the layer of compressible material 44 described above. In the transmission 2, step 308 corresponds to covering the FEC 42 with a layer of compressible material 44 as described above, such as by spraying spray film over the FEC 42 to form the layer of compressible material 44.

Then at step 310 the component 100 is connected to the component 200. To connect the components 100, 200 together, the connections surface 106 of the component 100 and a connection surface 202 of the component 200 are disposed so as to face each other and to be aligned with each other as shown in Fig. 5C. Then, as shown in Fig. 5D, the connection surfaces 106, 202 are pressed against each other until they abut each other and are connected to each other. It should be noted that in the direction normal to the drawing page portions of the connection surfaces 106, 202 are not aligned with the layer of compressible material and abut each other. It should be understood that the action of connecting, via clamping or fastening for example, can press the connection surfaces 106, 202 against each other as they are being connected. As can be seen in Fig. 5D, when the components 100, 200 are connected, the layer of compressible material 108 is compressed between the connection surfaces 106, 202, the particles 104 pierce the layer of compressible material 108, and the particles 104 penetrate the connection surfaces 106, 202, thereby increasing friction between the connection surfaces 106, 202. In the transmission 2, step 310 consists in aligning the apertures 40 in the housing cover 10 with the corresponding apertures in the rear section 28 of the housing body 20. Then the bolts 22 are inserted in the apertures 40 and the apertures 28 in the rear section 28 to fasten the housing cover 10 to the housing body 20. The method ends at step 312 where the mechanical assembly 204 resulting from the connection of the components 100, 200 can be used for its intended purpose and/or is ready for assembly into a larger mechanical assembly.

It is contemplated that the method 300 could be used to assemble different portions of the transmission housing 4, such as for assembling the front section 24 to the middle section 26 and/or for assembling the middle section 26 to the rear section 28. It is also contemplated that the method 300 could be used to assemble other types of mechanical assemblies having mechanical housings with two or more components. Examples of alternative embodiments of such mechanical assemblies include, but are not limited to, an internal combustion engine having a cylinder block, cylinder head and a crankcase, an electric motor having a motor housing, and a differential having a differential housing. It is also contemplated that the method 300 could be used for assembling mechanical assemblies having two or more components that do not define a mechanical housing. Examples of alternative embodiments of such mechanical assemblies include, but are not limited to, engine mounts, interfaces between suspension struts and chassis, and panel and frame assemblies.

Modifications and improvements to the above-described embodiments of the present invention may become apparent to those skilled in the art. The foregoing description is intended to be exemplary rather than limiting. The scope of the present technology is therefore intended to be limited solely by the appended claims.

## Claims

1. A method (300) for assembling a first component (10, 100) and a second component (20, 200) together, the first component (10, 100) having a first connection surface (12, 106), the second component (20, 200) having a second connection surface (202), the method comprising:
coating at least a portion of the first connection surface (12, 106) with a friction-enhancing coating (42, 102), the friction-enhancing coating (42, 102) comprising particles (104), the particles (104) being harder than a material of the first connection surface (12, 106) and a material of the second connection surface (202); and
connecting the first component (10, 100) to the second component (20, 200) such that:
the first connection surface (12, 106) abuts the second connection surface (202); and
the particles (104) of the friction-enhancing coating (42, 102) penetrate the first connection surface (12, 106) and the second connection surface (202);
the method (300) being **characterized in that** the method (300) further comprises:
covering the friction-enhancing coating (42, 102) with a layer of compressible material (44, 108) prior to connecting the first component (10, 100) to the second component (20, 200) for preventing the particles (104) from falling off of the first connection surface (12, 106), and
when the first component (10, 100) is connected to the second component (20, 200), the layer of compressible material (44, 108) being compressed and at least some of the particles (104) piercing the layer of compressible material (44, 108).

2. The method (300) of claim 1, wherein covering the friction-enhancing coating (42, 102) with the layer of compressible material (44, 108) comprises covering an area of the first connection surface (12, 106) with the layer of compressible material (44, 108) that is greater than an area of the first connection surface (12, 106) covered by the friction-enhancing coating (42, 102) such that the friction-enhancing coating (42, 102) is fully covered by the layer of compressible material (44, 108).

3. The method (300) of claim 1 or 2, wherein:
the first component (10) defines a first aperture (40) in the first connection surface (12, 106);
the second component (20) defines a second aperture in the second connection surface; and
connecting the first component (10) to the second component (20) comprises:
aligning the first aperture (40) with the second aperture;
inserting a fastener (22) through the first aperture (40) and the second aperture; and
fastening the first component (10) to the second component (20) with the fastener (22).

4. The method (300) of claim 3, wherein coating at least the portion of the first connection surface (12, 106) with the friction-enhancing coating (42, 102) comprises:
coating a region of the first connection surface (12) surrounding and adjacent to the first aperture (40) with the friction-enhancing coating (42).

5. The method (300) of claim 4, wherein coating the region of the first connection surface (12) surrounding and adjacent to the first aperture (40) with the friction-enhancing coating (42) comprises:
applying the friction-enhancing coating (42) over multiple annulus sectors around the first aperture (40).

6. The method (300) of claim 4 or 5, wherein covering the friction-enhancing coating (42) with the layer of compressible material (44, 108) comprises:
applying the layer of compressible material (44) over an annular area surrounding the first aperture (40).

7. The method (300) of claim 6, wherein an inner radius of the annular area is equal to a radius of the first aperture (40).

8. The method (300) of claim 6 or 7, wherein an outer circumference of the annular area is radially outward of the friction-enhancing coating (42).

9. The method (300) of any one of claims 1 to 8, further comprising cleaning the first component (10, 100) after coating at least the portion of the first connection surface (12, 106) with the friction-enhancing coating (42, 102) and before covering the friction-enhancing coating (42, 102) with the layer of compressible material (44, 108).

10. The method (300) of any one of claims 1 to 9, wherein covering the friction-enhancing coating (42, 102) with the layer of compressible material (44, 108) comprises:
spraying the compressible material over the friction-enhancing coating (42, 102) to form the layer of compressible material (44, 108).

11. The method (300) of any one of claims 1 to 10, wherein the layer of compressible material (44, 108) is a layer of elastomer.

12. The method (300) of claim 1 to 11, wherein the layer of compressible material (44, 108) is a layer of spray film.

13. The method (300) of any one of claims 1 to 12, wherein the friction-enhancing coating (42, 102) is GRIPCOAT^{®} Direct and the particles (104) are industrial diamonds.

14. The method (300) of any one of claims 1 to 13, wherein:
the first component (10) is a first portion of a mechanical housing (4); and
the second component (20) is a second portion of the mechanical housing (4).

15. A mechanical assembly (4, 204) comprising:
a first component (10, 100) having a first connection surface (12, 106); and
a second component (20, 200) having a second connection surface (202),
the first component (10, 100) and the second component (20, 200) being assembled together by the method (300) of any one of claims 1 to 14.
